# EUROPÄISCHE PATENTSCHRIFT

(11) **EP 1 781 506 B1**
(45) Veröffentlichungstag und Bekanntmachung des Hinweises auf die Patenterteilung: **16.04.2008**
(21) Anmeldenummer: 05768792.3
(22) Anmeldetag: 27.07.2005
(51) Int. Cl.: B60R 21/16, B60R 21/233

(54) **GASSACK ZUM SCHUTZ EINES FAHRZEUGINSASSEN**
AIRBAG FOR PROTECTING A VEHICLE OCCUPANT
SAC GONFLABLE POUR PROT GER UN OCCUPANT DANS UN V HICULE

(30) Priorität: 19.08.2004 DE 102004040090
(43) Veröffentlichungstag der Anmeldung: 09.05.2007
(73) Patentinhaber: AUTOLIV DEVELOPMENT AKTIEBOLAG, 447 83 Vargarda (SE)
(72) Erfinder: KODRNJA, Stefan, S-447 33 Vargarda (SE); SVENBRANT, Emma, S-41665 Gothenburg (SE); KUNTZSCH, Krestin, S-524 96 Ljung (SE); AHO, Christian, S-418 33 Göteborg (SE); LUCIC, Dobrila, S-442 36 Kungälv (SE); STOW, David, S-416 78 Gothenburg (SE); BÖRJESON, Gustav, 441 35 Alingsas (SE)
(74) Vertreter: Schön, Thilo
(86) Internationale Anmeldenummer: PCT/EP2005/008129
(87) Internationale Veröffentlichungsnummer: WO 2006/021281

(56) Entgegenhaltungen:
- EP-A- 0 940 298
- EP-A- 1 122 134
- EP-A- 1 393 998
- GB-A- 2 350 334
- US-A- 5 791 685

## Beschreibung

### Technisches Gebiet der Erfindung

Die Erfindung betrifft einen Gassack zum Schutz eines Fahrzeuginsassen nach dem Oberbegriff des Anspruchs 1.

Herkömmliche Gassäcke mit mehreren Kammern werden üblicherweise aus zwei Zuschnitten hergestellt, die entlang ihres Randbereiches vernäht sind und die Abnäher zur Abtrennung der Kammern aufweisen. Bei einigen Gassäcken haben die jeweiligen Kammern die Aufgabe einzelne Körperbereiche eines Insassen zu schützen. Aufgrund der unterschiedlichen Massen der einzelnen Körperbereiche wirken auf sie während eines Unfalls unterschiedlich starke Kräfte. Ferner dürfen schwächere Körperbereiche, wie z.B. der Rippenbereich, nicht zu stark belastet werden. Von daher ist es zum Teil erforderlich, die Kammern mit verschiedenen Gasdrücken unterschiedlich schnell aufzublasen.

### Stand der Technik

Die US 6,349,964 schlägt einen Seitengassack mit den Merkmalen des Oberbegriffs des Anspruchs 1 vor, mit einer oberen dem Schutz des Insassenthorax zugeordneten Kammer sowie einer unteren dem Schutz des Insassenbeckens zugeordneten Kammer, die von einer Trennaht unterteilt sind. Aufgrund der sich in einem Seitenaufprall ergebenden Anforderungen an die jeweiligen Kammern ist es vorgesehen, die Kammern mit unterschiedlichen Gasdrücken zu befüllen. So soll insbesondere die dem Beckenbereich zugeordnete Kammer mit einem höheren Druck als die dem Thoraxbereich des Insassen zugeordnete Kammer befüllt werden.

Ein Nachteil dieser herkömmlichen Anordnung des Seitengassackes besteht darin, dass aufgrund der unterschiedlichen Drücke in den Kammern die Trennaht hohen Belastungen ausgesetzt ist, so dass die Gefahr von Rißbildung oder sonstiger Leckagebildung besteht.

### Gegenstand der Erfindung

Ausgehend von diesem Stand der Technik ist es Aufgabe der Erfindung, einen Gassack zu schaffen, der während des Aufblasvorganges im Bereich der Trennaht zwischen zwei Kammerbereichen keinerlei Rißbildung aufweist und der sich einfach herstellen läßt.

Die Aufgabe wird durch einen Gassack mit den Merkmalen des Anspruchs 1 gelöst.

Der Gassack besteht aus einer ersten und einer zweiten Materiallage, die entlang ihrer Randbereiche miteinander vernäht sind. Der Gassack weist eine Öffnung auf, die mit einem Gasgenerator verbunden werden kann, damit dieser den Gassack während eines Unfalls aufblasen kann. Der Gassack weist weiterhin einen ersten und einen zweiten Kammerbereich auf, welche durch eine Trennaht voneinander getrennt sind. Jede der beiden Materiallagen des Gassacks besteht aus zumindest zwei Materialabschnitten, die jeweils dem ersten oder dem zweiten Kammerbereich zugeordnet sind. Die Materialabschnitte überlappen sich im Bereich der Trennaht und werden durch diese fixiert.

Durch die Überlappung im Bereich der Trennaht verläuft diese durch vier Lagen der Materialabschnitte. Auf diese Weise ist dieser Bereich des Gassacks derart verstärkt, dass er die Krafteinwirkung während des Aufblasvorgangs übersteht, ohne dass es zu Leckage- oder Rißbildung kommt.

Durch die separaten Materialabschnitte wird die Möglichkeit geschaffen, unterschiedliche Gewebelagen für die einzelnen Anwendungsbereiche einzusetzen. So können für besonders belastete Bereiche sehr reißfeste Gewebe benutzt werden, während für die übrigen Bereiche leichte, kostengünstige Gewebe eingesetzt werden können. Weiterhin können bestimmte Materialabschnitte beschichtet werden, um die Permeabilität zu minimieren und das Gewebe zusätzlich zu stärken.

Gemäß der Ausführungsform nach Anspruch 15 weist der Gassack eine weitere Materiallage auf, die ebenso durch die Trennaht fixiert wird und die bei besonders hohen Belastungen durch sehr unterschiedliche Gasdrücke in den beiden Kammerbereichen den Bereich um die Trennaht zusätzlich schützt.

Gemäß der Ausführungsform nach Anspruch 16 ist der Gassack einen Seitengassack zum Schutz des Fahrzeuginsassen bei einem Seitenaufprall. Die Kammerbereiche sind dabei dem Becken- und dem Thoraxbereich des Insassen zugeordnet und können mit unterschiedlichen Gasdrücken befüllt werden. Im allgemeinen wird die dem Beckenbereich zugeordnete Kammer mit einem höheren Gasdruck befüllt als die dem Thoraxbereich zugeordnete Kammer. Dabei soll sich der Gassack im Beckenbereich besonders schnell positionieren und dem im Bekkenbereich des Insassen befindlichen Schwerpunkt fixieren, um eine Bewegung des Insassen zur Fahrzeugseite hin zu verhindern.

Um diesen hohen Druck im Gassack über die erforderliche Zeitspanne aufrechtzuerhalten, weisen die dem Beckenkammerbereich zugeordneten Materialabschnitte ein besonders dichtes Gewebe auf und können zusätzlich mit einer Silikonschicht oder eine Folie beschichtet sein, so dass sich die Materialabschnitte neben der niedrigen Gasdurchlässigkeit auch durch eine hohe Reißfestigkeit auszeichnen.

Die dem Thoraxbereich zugeordneten Materialabschnitte sind aus einem durchlässigeren Gewebe hergestellt. Ein solches Gewebe ist preiswerter und weist ein geringeres Gewicht auf.

Gemäß einer weiteren Ausführungsform nach Anspruch 18 ist der Gassack ein Vorhanggassack und weist zumindest einen weiteren Kammerbereich sowie eine weitere Trennaht auf: Bei dem Vorhanggassack wird der zentrale Bereich unterhalb der mit einem Gasgenerator verbindbaren Öffnung durch die energiereich einströmenden Gase besonders belastet. Deshalb weist der zentrale Kammerbereich Materialabschnitte aus einem sehr dichten Gewebe auf, während die beiden außenseitigen Kammerbereiche aus weniger dichten Gewebeabschnitten hergestellt sind.

Weitere bevorzugte Ausführungsformen ergeben sich aus den weiteren Unteransprüchen sowie aus den Erläuterungen zu den nachstehenden Figuren. Es zeigen:

### Kurzbeschreibung der Zeichnungen

- Figur 1: Eine Draufsicht auf einen Seitengassack,
- Figur 1a: das in Figur 1 Gezeigte mit montiertem Gasgenerator,
- Figur 2: einen Schnitt entlang der Linie II-II aus Figur 1,
- Figur 3: Zusammenbau eines Seitengassacks gemäß einer ersten Ausführungsform,
- Figur 4: Zusammenbau eines Seitengassacks gemäß einer zweiten Ausführungsform,
- Figur 5: eine Draufsicht auf einen Vorhanggassack.

### Beschreibung bevorzugter Ausführungsformen

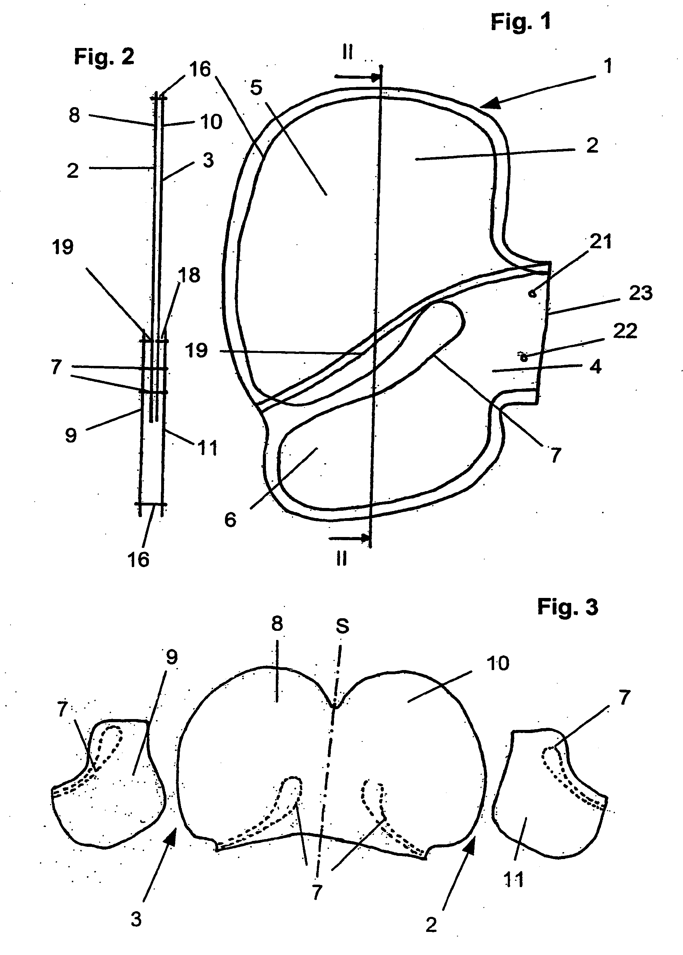

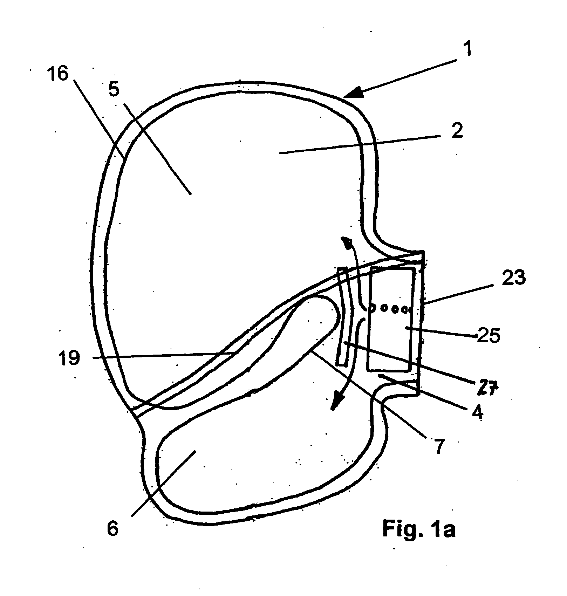

Der Aufbau eines Gassackes, der hier in Form eines Seitengassacks ausgebildet ist, wird anhand der Figuren 1 und 2 näher erläutert. Seitengassäcke werden normalerweise in der Rückenlehne eines Fahrzeugsitzes oder im Bereich der Seitentür angeordnet.

Der Seitengassack 1 besteht aus zwei Materiallagen 2, 3, die aus Gewebe hergestellt sind. Diese Materiallagen 2, 3 sind entlang ihrer Außenkontur durch eine Naht 16 miteinander vernäht. Der Befestigungsbereich 4 des Seitengassackes ist von der Umfangsnaht 16 ausgespart, so dass eine Öffnung 23 zum Anschluß an einen nicht dargestellten Gasgenerator gebildet ist. Gasgeneratoren weisen häufig Befestigungsbolzen auf, die bei in den Gassack eingeführtem Gasgenerator von innen durch die Befestigungsöffnungen 21, 22 geführt werden und somit den Gassack an Gehäusebauteilen befestigen.

In einem in etwa mittigen Bereich des Seitengassacks ist eine Trennaht 7 ausgebildet, die den aufblasbaren Bereich in zwei Kammerbereiche 5, 6 aufteilt. Die Trennaht 7 ist als Doppelnaht ausgebildet, die vom vorderseitigen Randbereich bis zum Befestigungsabschnitt verläuft und in einem bogenförmigen Verlauf zurück zum vorderen Randbereich geführt ist. Wie man in Figur 1 sieht, befindet sich das dem - in Figur 1a dargestellten - Gasgenerator 25 zugewandte Ende der Trennaht in etwa auf Höhe der Mitte der Öffnung 23 für den Gasgenerator.

Die Trennaht 7 ist so angeordnet, dass das vom Gasgenerator strömende Gas direkt in die beiden Kammerbereiche 5, 6 geleitet wird. Dazu kann beispielsweise ein Deflektor oder ein Gasleitgehäuse eingesetzt werden, um den Gasstrahl gezielt zu leiten. Dies ist in Figur 1a dargestellt, der man entnimmt, dass sich zwischen Gasgenerator 25 und Trennaht 7 ein Deflektor 27 befindet, der ein direktes Auftreffen von aus dem Gasgenerator kommenden Gasen auf die Trennaht verhindert. Gasgenerator 25, Deflektor 27 und Trennaht 7 sind so angeordnet, dass sich eine weitgehende Trennung der beiden Kammerbereiche 5, 6 ergibt. Dies erleichtert es, unterschiedliche Drücke in den beiden Kammerbereichen zu erreichen.

Seitengassäcke werden üblicherweise nach dem Nähvorgang der Umgebungsnaht von innen nach außen gewendet, so dass sich die Naht innerhalb des Gassacks befindet. Der Seitengassack kann somit durch die Öffnung 23 im Befestigungsbereich 4 gestülpt werden, so dass anschließend die Trennaht 7 aufgesetzt werden kann.

Wie in Figur 2 besonders deutlich dargestellt, besteht der Seitengassack aus den vier Materialabschnitten 8, 9, 10 und 11, wobei die Abschnitte 8 und 10 dem oberen Kammerbereich 5 und die Abschnitte 9 und 11 dem unteren Kammerbereich 6 zugeordnet sind. Die jeweils einander zugeordneten Paare der Materialabschnitte 8,10; 9, 11 überlappen sich im mittigen Bereich und werden durch die Trennaht 7 fixiert. Die Materialabschnitte 8 und 9 der ersten Materiallage 2 werden mit der Naht 19 zusammengehalten, während die Materialabschnitte 10 und 11 der zweiten Materiallage 3 durch die Naht 18 zusammengehalten werden.

Im Überlappungsbereich der vier Materialabschnitte 8, 9, 10, 11 befinden sich die oberen Materialabschnitte 8 und 10 innerhalb der unteren Materialabschnitte 9 und 11. Gemäß einer weiteren nicht dargestellten Ausführungsform befinden sich die unteren Abschnitte 9 und 11 innerhalb der oberen Abschnitte 8 und 10.

Die dem Beckenbereich eines Fahrzeuginsassen zugeordnete Kammer 6 besteht aus einem relativ dichten Gewebe, welches vorzugsweise beschichtet ist. Beispielsweise können Gewebe im Bereich von 580 bis 700 dtex eingesetzt werden.

Die dem Thoraxbereich des Insassen zugeordnete Kammer 5 besteht aus einem relativ durchlässigen Gewebe und muß nicht beschichtet sein. Hier können Gewebe im Bereich von 235 bis 580 dtex eingesetzt werden.

Figur 3 zeigt eine schematische Darstellung der einzelnen Materialabschnitte 8, 9, 10, 11. Der Verdeutlichung halber ist hierbei der Verlauf der Trennaht 7 gestrichelt eingezeichnet, obwohl die Trennaht erst nach dem Zusammenfügen und Vernähen der einzelnen Materialabschnitte hinzugefügt wird.

Die beiden Materialabschnitte 8 und 10 sind aus einer einzigen Materiallage geformt, die eine schmetterlingsartige Gestalt aufweist. Entlang der Symmetrieachse S verläuft die Faltachse, um die die schmetterlingsartige Materiallage gefaltet wird. Die beiden übrigen Materialabschnitte 9 und 11 sind als separate Stücke ausgebildet und werden an die zugehörigen Materialabschnitte in jeder Materiallage durch die Nähte 18, 19 angenäht.

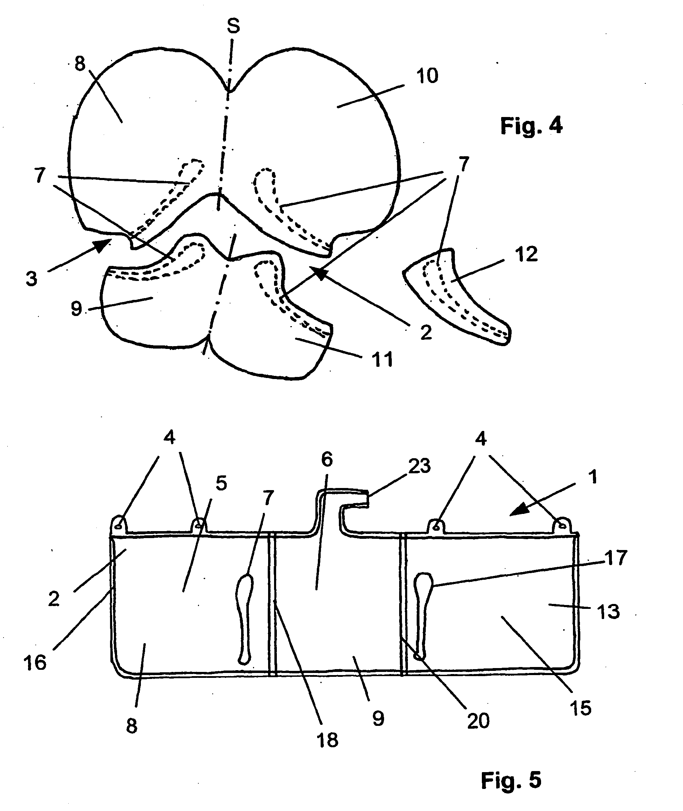

Gemäß dem Ausführungsbeispiel nach Figur 4 sind sowohl die oberen Materialabschnitte 8 und 10 als auch die unteren Materialabschnitte 9 und 11 als schmetterlingsartige Materiallagen ausgebildet, die jeweils um die Symmetrieachsen gefaltet werden, nachdem die beiden Teile zusammengefügt wurden. Zusätzlich wird hier eine weitere Materiallage 12 im Bereich der Überlappung der Materialabschnitte aufgesetzt, die eine zusätzliche Verstärkung dieses Bereiches gewährleistet.

Die Erfindung beinhaltet auch weitere Ausführungen, die nicht in den Figuren dargestellt sind. So können auch sämtliche Materialabschnitte 8, 9, 10, 11 aus separaten Teilen bestehen und aneinander befestigt werden.

Der Begriff Symmetrieachse soll hierbei nicht sehr eng verstanden werden. Es können sich leichte Abweichungen in der Formgebung des Gassackes und der einzelnen Materialabschnitte ergeben, die fertigungsbedingt sind, so dass die einander zugeordneten Materialabschnitte im allgemeinen symmetrisch sind, aber Abweichungen voneinander aufweisen können.

In Figur 5 ist ein Vorhanggassack 1 dargestellt, der üblicherweise an seiner oberen Kante an Befestigungspunkten 4 im Dachrahmen des Fahrzeugs befestigt und dort untergebracht werden kann.

Der Vorhanggassack weist eine erste Materiallage 2 und eine zweite Materiallage auf, die entlang ihrer Außenkontur vernäht sind. Der Bereich der Öffnung 23 wird dabei von der Naht freigelassen, um einen Gasgenerator, bzw. ein Gasleitelement in die Öffnung einführen zu können.

Kammerbereiche 5, 6 und 15 sind durch Trennähte 7 und 17 abgegrenzt, so dass zwei außenseitige und eine zentrale Kammer gebildet sind. Entsprechend dem vorherigen Ausführungsbeispiel sind die einander zugeordneten Materialabschnitte 8, 10 und 9, 11 und 13, 14 mit Nähten verbunden, von denen die Nähte 18 und 20 hier sichtbar sind.

Aufgrund der relativ hohen Belastungen beim Eintritt des Gases ist die mittig angeordnete Kammer 6 aus einem relativ dichten und somit stabilen Gewebe versehen, welches zur weiteren Verstärkung noch beschichtet sein kann, während die außenseitigen Kammern 5 und 15 aus einfacherem Gewebe zur Gewichts- und Kostenreduzierung hergestellt sind. Gemäß einer Ausführung ist für die mittig angeordneten Kammer ein beschichtetes Gewebe mit 700dtex gewählt, während für die außenseitigen Kammerbereiche ein unbeschichtetes Gewebe im Bereich von 235 bis 580 dtex ausreichend ist.

Die vorstehend beschriebene Erfindung läßt sich natürlich auch auf weitere Arten von Gassäcken, bzw. Airbags anwenden und soll nicht auf Seiten- und Vorhanggassäcke beschränkt sein.

### Bezugszeichenliste

- 1: Gassack
- 2: erste Materiallage
- 3: zweite Materiallage
- 4: Befestigungsabschnitt
- 5: erster Kammerbereich
- 6: zweiter Kammerbereich
- 7: Trennaht
- 8: erster Materialabschnitt
- 9: zweiter Materialabschnitt
- 10: dritter Materialabschnitt
- 11: vierter Materialabschnitt
- 12: Verstärkungslage
- 13: fünfter Materialabschnitt
- 14: sechster Materialabschnitt
- 15: dritter Kammerbereich
- 16: Umfangsnaht
- 17: Trennaht
- 18: Befestigungsnaht
- 19: Befestigungsnaht
- 20: Befestigungsnaht
- 21: Befestigungsöffnung
- 22: Befestigungsöffnung
- 23: Öffnung für Gasgenerator
- 25: Gasgenerator
- 27: Deflektor

## Patentansprüche

1. Gassack zum Schutz eines Fahrzeuginsassen bestehend aus einer ersten (2) und einer zweiten (3) Materiallage, die entlang ihres Randbereiches miteinander vernäht sind, wobei der Gassack (1) mit seinem an einem Teil der Fahrzeuginnenausstattung angebrachten Befestigungsabschnitt (4) mit einem Gasgenerator verbindbar ist, um während eines Unfalls von diesem mit Gas aufgeblasen zu werden, wobei der Gassack zumindest einen ersten und einen zweiten Kammerbereich (5, 6) aufweist die durch eine Trennaht (7) voneinander getrennt sind,
**dadurch gekennzeichnet, dass** jede der beiden Materiallagen (2, 3) aus wenigstens zwei getrennten Materialabschnitten (8, 9, 10, 11) besteht, die jeweils dem zumindest ersten oder zweiten Kammerbereich (5, 6) zugeordnet sind, dass die Materialabschnitte (8,9,10,11) derart miteinander vernäht sind, dass sie sich im Bereich der Trennaht (7) überlappen und dass die Trennaht (7) durch den durch vier Lagen der Materialabschnitte (8, 9, 10, 11) gebildeten Überlappungsbereich verläuft.

2. Gassack nach Anspruch 1, **dadurch gekennzeichnet, dass** jeweils beide Materialabschnitte (8, 9, 10, 11) der zwei Materiallagen (2, 3) aus getrennten Zuschnitten bestehen, wobei die einander zugeordneten Materialabschnitte (8, 10; 9, 11) ungefähr die gleiche Form aufweisen.

3. Gassack nach einem der Ansprüche 1 oder Anspruch 2, **dadurch gekennzeichnet, dass** die jeweils einander zugeordneten Materialabschnitte (8, 10; 9, 11) aus Geweben mit unterschiedlicher Gasdurchlässigkeit und/oder unterschiedlicher Reißfestigkeit bestehen.

4. Gassack nach einem der Ansprüche 1 oder 2, **dadurch gekennzeichnet, dass** die jeweils einander zugeordneten Materialabschnitte (8, 10; 9, 11) aus gleichen Gewebetypen geformt sind.

5. Gassack nach einem der Ansprüche 1 bis 2 oder 4, **dadurch gekennzeichnet, dass** zumindest zwei der jeweils einander zugeordneten Materialabschnitte (8, 10; 9, 11) der zwei Materiallagen (2, 3) aus einem einzigen Zuschnitt bestehen, die eine schmetterlingsartige Gestalt aufweist und in ihrem zentralen Abschnitt eine Symmetrieachse (S) aufweist.

6. Gassack nach Anspruch 5, **dadurch gekennzeichnet, dass** der schmetterlingsartige Zuschnitt entlang der Symmetrieachse (S) gefaltet ist, so dass sich die beiden Materialabschnitte (8, 10; 9,11) überlappen.

7. Gassack nach Anspruch 6, **dadurch gekennzeichnet, dass** jeweils beide Materialabschnitte (8, 10; 9, 11) der zwei Materiallagen aus zwei schmetterlingsartigen Zuschnitten bestehen.

8. Gassack nach einem der Ansprüche 4 bis 7, **dadurch gekennzeichnet, dass** die Materialabschnitte (8, 10) des ersten Kammerbereiches (5) aus einem relativ porösen Gewebe gefertigt sind.

9. Gassack nach einem der Ansprüche 4 bis 8, **dadurch gekennzeichnet, dass** die Materialabschnitte (9, 11) des zweiten Kammerbereiches (6) aus einem relativ dichten Gewebe gefertigt sind.

10. Gassack nach einem der vorgenannten Ansprüche, **dadurch gekennzeichnet, dass** zumindest die Materialabschnitte (9, 11) des zweiten Kammerbereiches (6) mit einer silikonartigen Masse oder mit einer Folie beschichtet sind.

11. Gassack nach einem der vorgenannten Ansprüche, **dadurch gekennzeichnet, dass** im Überlappungsbereich der Materialabschnitte (8, 9, 10, 11) die dem ersten Kammerbereich (5) zugeordneten Materialabschnitte (8, 10) innerhalb der dem zweiten Kammerbereich (6) zugeordneten Materialabschnitte (9, 11) liegen.

12. Gassack nach einem der Ansprüche 1 bis 10, **dadurch gekennzeichnet, dass** im Überlappungsbereich der Materialabschnitte (8, 9, 10, 11) die dem ersten Kammerbereich (5) zugeordneten Materialabschnitte (8, 10) außerhalb der dem zweiten Kammerbereich (6) zugeordneten Materialabschnitte (9, 11) liegen.

13. Gassack nach einem der vorgenannten Ansprüche, **dadurch gekennzeichnet, dass** im Überlappungsbereich der Materialabschnitte (8, 9, 10, 11) eine weitere Materiallage (12) vorgesehen ist, die auf der Außenseite einer Materiallage (2) aufgelegt und von der Trennaht (7) fixiert ist.

14. Gassack nach einem der vorgenannten Ansprüche, **dadurch gekennzeichnet, dass** der Gassack (1) ein Seitenschutzgassack ist und im Bereich der Fahrzeugseitenstruktur oder im Fahrzeugsitz untergebracht werden kann.

15. Gassack nach Anspruch 14, **dadurch gekennzeichnet, dass** der erste Kammerbereich (5) des Gassacks dem Schutz des Thorax und der zweite Kammerbereich (6) dem Schutz des Beckenbereiches eines Fahrzeuginsassen zugeordnet sind.

16. Gassack nach einem der Ansprüche 1 bis 15, **dadurch gekennzeichnet, dass** der Gassack (1) zumindest einen weiteren Kammerbereich (15) sowie eine weitere Trennaht (17) aufweist und zumindest drei Materialabschnitte (8, 9, 13; 10, 11, 14) in einer Materiallagen (2; 3) vorgesehen sind.

17. Gassack nach Anspruch 16, **dadurch gekennzeichnet, dass** der Gassack (1) als Vorhanggassack ausgebildet ist und im Bereich des Dachrahmens des Fahrzeuges untergebracht werden kann.

18. Gassack nach einem der vorangehenden Ansprüche, **dadurch gekennzeichnet, dass** die Trennaht (7) ist so angeordnet ist, dass das vom Gasgenerator strömende Gas direkt in die beiden Kammerbereiche(5, 6)geleitet wird.

19. Gassack nach Anspruch 18, **dadurch gekennzeichnet, dass** sich das dem Gasgenerator (25) zugewandte Ende der Trennaht in etwa auf Höhe der Mitte einer Öffnung (23) für den Gasgenerator befindet.

## Claims

1. Airbag for the protection of a vehicle occupant comprising a first (2) and a second (3) material layer being sewn together along their margin area, whereby the airbag (1) is connectable to a gas generator via a fixing section, which is mounted at the interior of the vehicle, in order to be inflated by the gas generator in case of an accident, whereby the airbag comprises at least a first and a second chamber area (5,6) being separated by a separation seam (7), **characterised in that** each of the two material layers (2, 3) consist of at least two separate material sections (8, 9, 10, 11), that are assigned to the at least first or second chamber area respectively, that the material sections (8,9,10,11) are sewn to each other in a way that they overlap in the area of the separation seam (7) and that the separation seam (7) runs through the overlapping region formed by four layers of the material sections (8, 9, 10, 11).

2. Airbag according to claim 1, **characterised in that** both material sections (8, 9, 10, 11) of the two respective material layers (2, 3) consist of separate cuts, whereby the material sections assigned to each other (8, 10; 9, 11) show approximately the same shape.

3. Airbag according to one of the claims 1 or 2, **characterised in that** the material sections (8, 10; 9, 11) assigned to each other consist of fabric with different gas penetrability and/or different tenacity.

4. Airbag according to one of the claims 1 or 2, **characterised in that** the material sections (8, 10; 9, 11) assigned to each other (8, 10; 9, 11) are of the same fabric type.

5. Airbag according to one of the claims 1 to 2 or 4, **characterised in that** in the two material layers (2, 3) at least two of the material sections (8, 10; 9, 11) assigned to each other consist of a single cut, that shows a butterfly-like shape and shows a symmetry axis (S) in its central section.

6. Airbag according to claim 5, **characterised in that** the butterfly-like cut is folded along the symmetry axis (S), so that the two material sections (8, 10; 9, 11) overlap.

7. Airbag according to claim 6, **characterised in that** both material sections (8, 10; 9, 11) of the two material layers are made of two butterfly-like cuts.

8. Airbag according to one of the claims 4 to 7, **characterised in that** the material sections (8, 10) of the first chamber area (5) are made of a relatively porous fabric.

9. Airbag according to one of the claims 4 to 8, **characterised in that** the material sections (9, 11) of the second chamber field (6) are made of a relatively tight fabric.

10. Airbag according to one of the preceding claims, **characterised in that** at least the material sections (9, 11) of the second chamber area (6) are coated with a silicone-like mass or with a foil.

11. Airbag according to one of the preceding claims, **characterised in that** in the overlapping region of the material sections (8, 9, 10, 11) the material sections (8, 10) assigned to the first chamber area (5) are lying on the inside of the material sections (9, 11) assigned to the second chamber area (6).

12. Airbag according to one of the claims 1 to 10, **characterised in that** in the overlapping area of the material sections (8, 9, 10, 11) the material sections assigned to the first chamber area (5) (8, 10) are lying on the outside of the material sections (9,11) assigned to the second chamber area (6).

13. Airbag according to one of the preceding claims, **characterised in that** in the overlapping region of the material sections (8, 9, 10, 11) a further material layer (12) is present which is put the outer side of a material layer (2) and fixed by the separation seam (7).

14. Airbag according to one of the preceding claims, **characterised in that** the airbag (1) is a side protection airbag and being able to be placed in the area of the vehicle side structure or in the vehicle seat.

15. Airbag according to claim 14, **characterised in that** the first chamber area (5) of the airbag is assigned to the protection of the thorax and the second chamber (6) to the protection of the pelvis area of a vehicle occupant.

16. Airbag according to one of the claims 1 to 15, **characterised in that** the airbag (1) shows at least one further chamber area (15) as well as a further separation seam (17) and at least three material sections (8, 9, 13; 10, 11, 14) are provided in one material layer (2; 3).

17. Airbag according to claim 16, **characterised in that** the airbag (1) is configured as a curtain airbag and being able to be placed in the area of the roof frame of the vehicle.

18. Airbag according to one of the preceding claims, **characterised in that** the separation seam (7) is arranged in a way that the gas streaming from the gas generator is guided directly into the two chamber areas (5,6).

19. Airbag according to claim 18, **characterised in that** end of the separation seam pointing towards the gas generator is located approximately at the height of the middle of an opening (23) for the gas generator.

## Revendications

1. Sac gonflable pour protéger un occupant dans un véhicule, composé d'une première (2) et d'une seconde (3) couche de matériau, lesquelles sont cousues l'une avec l'autre le long de leurs bords, le sac gonflable (1) pouvant être relié à un générateur de gaz avec sa section de fixation (4) disposée au niveau d'une partie de la garniture intérieure du véhicule, pour être gonflé par ce gaz en cas d'accident, le sac gonflable comportant au moins une première et une seconde zone de chambre (5, 6), lesquelles sont séparées l'une de l'autre par une couture de séparation (7), **caractérisé en ce que** chacune des deux couches de matériau (2, 3) se compose au moins de deux sections de matériau séparées (8, 9, 10, 11), lesquelles sont respectivement affectées au moins à la première ou la seconde zone de chambre (5, 6), **en ce que** les sections de matériau (8, 9, 10, 11) sont cousues l'une avec l'autre, de sorte qu'elles se chevauchent dans la région de la couture de séparation (7) et **en ce que** la couture de séparation (7) passe par la zone de chevauchement formée par quatre couches des sections de matériau (8, 9, 10, 11).

2. Sac gonflable selon la revendication 1, **caractérisé en ce que** respectivement deux sections de matériau (8, 9, 10, 11) des deux couches de matériau (2, 3) se composent de coupes séparées, les sections de matériau (8, 10 ; 9, 11) affectées réciproquement comportant presque la même forme.

3. Sac gonflable selon l'une quelconque des revendications 1 ou 2, **caractérisé en ce que** les sections de matériau (8, 10 ; 9, 11) affectées réciproquement se composent de tissu avec une perméabilité au gaz différente et/ou une résistance au déchirement différente.

4. Sac gonflable selon l'une quelconque des revendications 1 ou 2, **caractérisé en ce que** les sections de matériau (8, 10 ; 9, 11) affectées réciproquement sont formées avec le même type de tissu.

5. Sac gonflable selon l'une quelconque des revendications 1 à 2 ou 4, **caractérisé en ce que** au moins deux des sections de matériau (8, 10 ; 9, 11) affectées réciproquement des deux couches de matériau (2, 3) se composent d'une seule coupe, laquelle comporte une forme en papillon et comporte un axe de symétrie (S) dans sa section centrale.

6. Sac gonflable selon la revendication 5, **caractérisé en ce que** la coupe en papillon est pliée le long de l'axe de symétrie (S), de sorte que les deux sections de matériau (8, 10 ; 9, 11) se chevauchent.

7. Sac gonflable selon la revendication 6, **caractérisé en ce que** respectivement les deux sections de matériau (8, 10 ; 9, 11) des deux couches de matériau se composent de deux coupes en papillon.

8. Sac gonflable selon l'une quelconque des revendications 4 à 7, **caractérisé en ce que** les sections de matériau (8, 10) de la première zone de chambre (5) sont fabriquées à partir d'un tissu relativement poreux.

9. Sac gonflable selon l'une quelconque des revendications 4 à 8, **caractérisé en ce que** les sections de matériau (9, 11) de la seconde zone de chambre (6) sont fabriquées à partir d'un tissu relativement étanche.

10. Sac gonflable selon l'une quelconque des revendications précédentes, **caractérisé en ce que** au moins les sections de matériau (9, 11) de la seconde zone de chambre (6) sont recouvertes d'une masse ou d'une feuille en silicone.

11. Sac gonflable selon l'une quelconque des revendications précédentes, **caractérisé en ce que** les sections de matériau (8, 10) affectées à la première zone de chambre (5) dans la zone de chevauchement des sections de matériau (8, 9, 10, 11) se situent à l'intérieur des sections de matériau (9, 11) affectées à la seconde zone de chambre (6).

12. Sac gonflable selon l'une quelconque des revendications 1 à 10, **caractérisé en ce que** les sections de matériau (8, 10) affectées à la première zone de chambre (5) dans la zone de chevauchement des sections de matériau (8, 9, 10, 11) se situent en dehors des sections de matériau (9, 11) affectées à la seconde zone de chambre (6).

13. Sac gonflable selon l'une quelconque des revendications précédentes, **caractérisé en ce qu'**une autre couche de matériau (12) est prévue dans la zone de chevauchement des sections de matériau (8, 9, 10, 11), laquelle est appliquée sur le côté extérieur d'une couche de matériau (2) et fixée par la couture de séparation (7).

14. Sac gonflable selon l'une quelconque des revendications précédentes, **caractérisé en ce que** le sac gonflable (1) est un sac gonflable de protection latérale et **en ce qu'**il peut être placé dans la région de la structure latérale du véhicule ou dans le siège.

15. Sac gonflable selon la revendication 14, **caractérisé en ce que** la première zone de chambre (5) du sac gonflable est affectée à la protection du thorax et **en ce que** la seconde zone de chambre (6) est affectée à la protection du bassin d'un occupant du véhicule.

16. Sac gonflable selon l'une quelconque des revendications 1 à 15, **caractérisé en ce que** le sac gonflable (1) comporte au moins une autre zone de chambre (15) ainsi qu'une autre couture de séparation (17) et **en ce que** trois sections de matériau (8, 9, 13 ; 10, 11, 14) au moins sont prévues dans une couche de matériau (2 ; 3).

17. Sac gonflable selon la revendication 16, **caractérisé en ce que** le sac gonflable (1) est conçu comme sac gonflable suspendu et **en ce qu'**il peut être placé dans la région du cadre de toit du véhicule.

18. Sac gonflable selon l'une quelconque des revendications précédentes, **caractérisé en ce que** la couture de séparation (7) est disposée, de sorte que le gaz s'écoulant du générateur de gaz est dirigé directement dans les deux zones de chambre (5, 6).

19. Sac gonflable selon la revendication 18, **caractérisé en ce que** l'extrémité opposée au générateur de gaz (25) de la couture de séparation se situe à peu près à hauteur du milieu d'une ouverture (23) du générateur de gaz.
